# EUROPÄISCHE PATENTSCHRIFT

(11) **EP 0 596 346 B1**
(45) Veröffentlichungstag und Bekanntmachung des Hinweises auf die Patenterteilung: **16.07.1997**
(21) Anmeldenummer: 93117140.9
(22) Anmeldetag: 22.10.1993
(51) Int. Cl.: F16C 3/10

(54) **Gebaute Kurbelwelle für Hubkolbenmaschinen**
Crank shaft made of several parts for piston engines
Vilebrequin composé pour moteurs à piston

(30) Priorität: 06.11.1992 DE 4237521
(43) Veröffentlichungstag der Anmeldung: 11.05.1994
(73) Patentinhaber: AUDI AG, 85045 Ingolstadt (DE)
(72) Erfinder: Naumann, Fritz, Dr., D-85134 Stammham (DE); Haldenwanger, Hans-Günther, Dipl.-Ing., D-85055 Ingolstadt (DE)

(56) Entgegenhaltungen:
- EP-A- 0 315 136
- WO-A-93/11366
- DE-A- 1 425 097
- DE-A- 2 135 378
- DE-A- 3 207 325
- DE-A- 3 446 262
- DE-A- 4 133 607
- DE-C- 422 828
- DE-U- 8 802 714

## Beschreibung

Die Erfindung betrifft eine gebaute Kurbelwelle für Hubkolbenmaschinen, insbesondere für Brennkraftmaschinen, gemäß dem Oberbegriff des Patentanspruches 1.

Eine gattungsgemäße Kurbelwelle zeigt die DE-C-422 828. Dabei sind die Kurbelwangen mit den Hubzapfen und den Lagerzapfen zunächst durch Schrumpfung festgelegt und dann durch Verschweißen verbunden, wobei die Verschweißung an den freien Stirnseiten der Hub- und Lagerzapfen im Bereich der durchgehenden Bohrungen der Kurbelwangen beispielsweise elektrisch erfolgt.

Aufgabe der Erfindung ist es, eine gebaute Kurbelwelle der gattungsgemäßen Art vorzuschlagen, die bei gleichzeitiger Montage von einteiligen Pleuelstangen eine hinsichtlich des Fertigungsaufwandes und der Betriebssicherheit verbesserte Konstruktion aufweist.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Erfindungsgemäß wird vorgeschlagen, die Bohrungen zumindest für die Hubzapfen in den Kurbelwangen als Sackloch-Bohrungen auszubilden, die zunächst in fertigungstechnisch günstiger Weise Bauteilanschläge in axialer Richtung bilden, und anschließend durch Strahlschweißen durch den Bohrungsgrund hindurch den Bohrungsgrund mit den Stirnseiten der Hubzapfen zu verschweißen. Die Verschweißung kann durch Elektronenstrahlschweißen oder bevorzugt durch Laserstrahlschweißen erfolgen, wobei nur örtlich sehr begrenzt hohe Temperaturen auftreten. Diese Temperaturen werden schnell und unkritisch in den Hubzapfen eingeleitet, ohne die durch die Schrumpfung erzeugten Druckvorspannungen im Bohrungs- und Umfangsbereich der Hubzapfen nachteilig zu beeinflussen und ohne eine schädliche Erwärmung der Gleitlagerschalen zu verursachen.

Bevorzugt werden die Hubzapfen nur im Bereich gleichmäßiger Wandstärke des Bohrungsgrundes mit den Kurbelwangen verschweißt, d. h. in dem Bereich, der nicht von angrenzenden Umfangsbereichen der Hauptlagerzapfen abgedeckt ist. Damit werden gleichmäßige Spannungsverteilungen im Bereich der Schweißzonen erzielt.

Zur Erhöhung der Festigkeit der Schweißverbindung können im Bereich der Sackloch-Bohrungen der Kurbelwangen Ausnehmungen zur Verminderung deren Wandstärke vorgesehen sein, durch die hindurch die Kurbelwangen zusätzlich umfangsseitig an mehreren örtlichen Stellen mit den Hubzapfen verschweißt sind.

Ferner können vorteilhaft die in den Hubzapfen und Kurbelwangen in bekannter Weise vorgesehenen Ölkanäle zur Kühlung der Lagerschalen der Pleuel während des Schweißvorganges mit einem Kühlmedium beaufschlagt werden.

Schließlich können durch die Verwendung höherfesteren Materials für die Hubzapfen vorteilhaft das Gewicht und die Kosten der Kurbelwelle reduziert werden. Ferner kann durch die erhöhte Druckspannung an den Hubzapfen - aufgrund des Einschrumpfvorganges - eine entsprechende zusätzliche Bearbeitung (rollieren) entfallen.

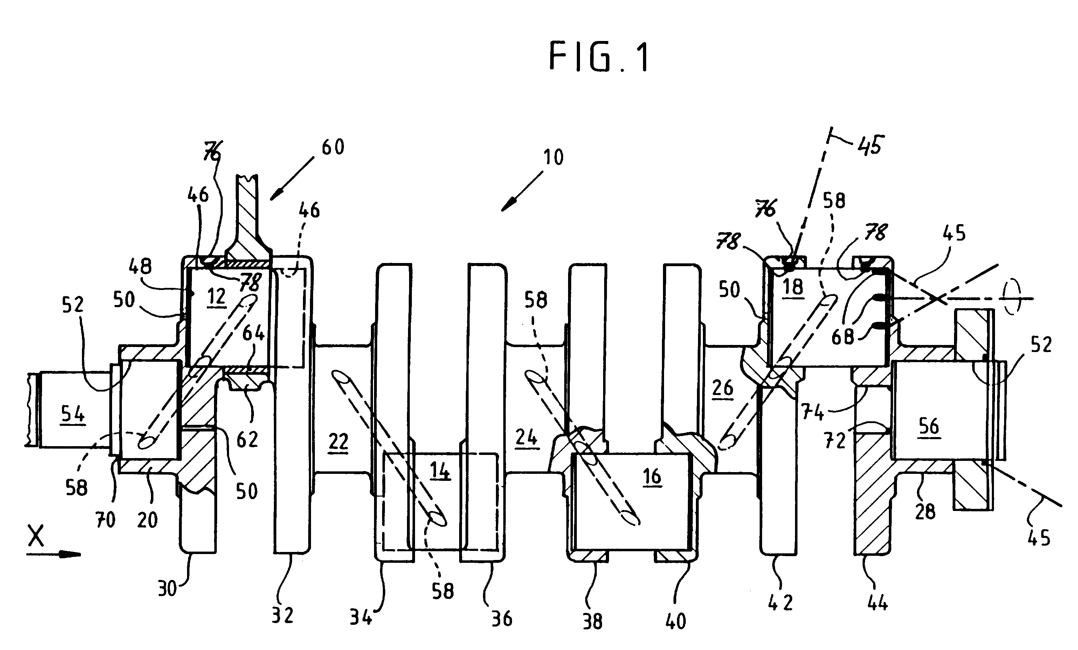

Ein Ausführungsbeispiel der Erfindung ist im folgenden mit weiteren Einzelheiten näher erläutert. Die anliegende Zeichnung zeigt in
- Fig. 1: eine nach dem erfindungsgemäßen Verfahren hergestellte Kurbelwelle für eine 4-Zylinder-Brennkraftmaschine mit teilweise aufgebrochenen Hubzapfen und
- Fig. 2: eine Ansicht in Richtung des Pfeiles X der Fig. 1 auf die Kurbelwelle.

Mit 10 ist eine Kurbelwelle für eine 4-Zylinder-Hubkolben-Brennkraftmaschine bezeichnet, die sich im wesentlichen aus vier rotationssymetrischen Hubzapfen 12,14, 16,18, fünf rotationssymetrischen Lagerzapfen 20,22,24, 26,28 und dazwischenliegenden Kurbelwangen 30,32,34,36, 38,40,42,44 zusammensetzt.

Die Kurbelwangen 30 bis 44 sind Präzisionsschmiedeteile aus legiertem Stahl, wobei die Kurbelwangen 30 und 44 bzw. 32,34 und 40,42 mit den jeweils angeformten Lagerzapfen 22,26 Gleichteile sind. Ein Einzelteil bilden die Kurbelwangen 36,38 mit dem Lagerzapfen 24.

Die beschriebenen Lagerzapfen sind entsprechend ihrem Verwendungszweck feingedreht, geschliffen und gehärtet. Gleiches gilt für die einzelnen Hubzapfen 12 bis 18.

Eine jede Kurbelwange 30 bis 44 weist eine präzisionsbearbeitete Sackloch-Bohrung 46 auf, in der entweder mit Preßsitz oder mit Schrumpfsitz die zylindrischen Hubzapfen 12 bis 18 in einer genau definierten Tiefe aufnehmbar sind, wobei der jeweilige Bohrungsgrund 48 als axialer Anschlag dient.

Im Bohrungsgrund 48 ist jeweils eine Bohrung 50 vorgesehen, durch die hindurch beim Einsetzen der Hubzapfen Luft entweichen kann.

Die endseitigen Kurbelwangen 30,44 bzw. deren Lagerzapfen 20,28 weisen je eine zentrische Bohrung 52 auf, in die rotationssymetrisch ausgebildete Antriebszapfen 54, 56 eingepreßt und mit Laserenergie mit der Kurbelwange bzw. dem Lagerzapfen verschweißt sind.

Zur Schmierung der Hubzapfen 12 bis 18 von den Lagerzapfen 20 bis 26 der Kurbelwelle 10 aus sind jeweils schräg vom einen Lagerzapfen (z.B. 22) zu einem benachbarten Hubzapfen (z.B. 14) Ölkanäle 58 gebohrt (gestrichelte Linien), die nach dem Zusammenfahren der Einzelteile der Kurbelwelle 10 durch Einschieben von Röhrchen oder durch wiederentfernbare Stifte auch als Positionierhilfe dienen können.

Auf den Hubzapfen 12 bis 18 sind Pleuelstangen 60 (nur für den Hubzapfen 12 und nur teilweise dargestellt) mit Gleitlagern 64 in geschlossenen Lageraugen 62 gelagert, deren nicht dargestelltes kleineres Lagerauge in bekannter Weise über Kolbenbolzen mit den Hubkolben der Brennkraftmaschine verbindbar sind.

Beim Zusammenbau der Kurbelwelle 10 wird wie folgt verfahren:

Zunächst werden die dargestellten Kurbelwangen 30 bis 44 mit den angeformten Lagerzapfen 20 bis 28, die Hubzapfen 12 bis 18 und die Antriebszapfen 54,56 mit hoher Präzision gefertigt, wobei die Antriebszapfen 54,56 mit der Bohrung 52 als Preßpassung und die Sackloch-Bohrungen 46 mit den Hubzapfen 12 bis 18 mit einer definierten maßlichen Überdeckung zum Einschrumpfen sehr genau ausgeführt sind. Auch die Ölkanäle 58 werden in einer geeigneten Vorrichtung positionsgenau gebohrt.

Anschließend werden die Hubzapfen 12 bis 18 auf eine definierte Minustemperatur abgekühlt und die Pleuelstangen 60 mit montierten Gleitlagern 64 bereitgestellt.

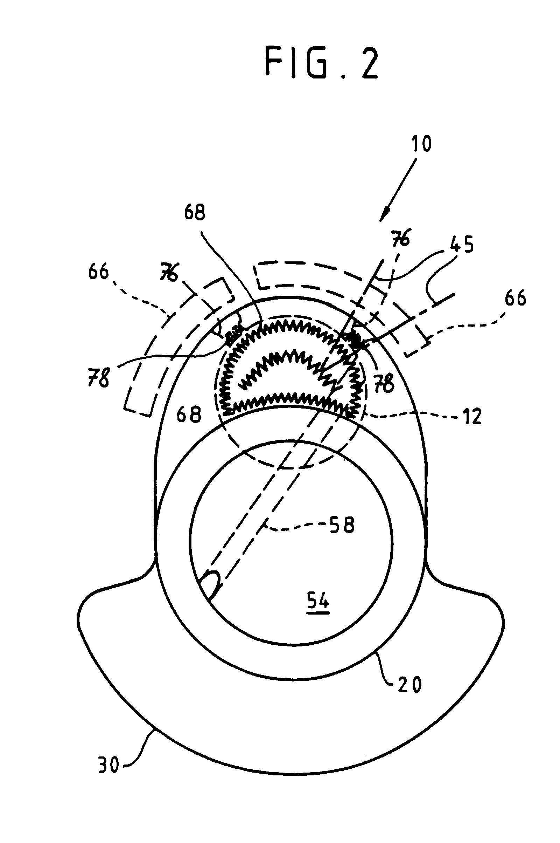

Sodann werden die Kurbelwangen 30 bis 44 in der gezeichneten Reihenfolge in einer nicht dargestellten Vorrichtung mit verfahrbaren Spannbacken in axialer und drehwinkelgenauer Ausrichtung aufgespannt und über an der Vorrichtung angebrachte Induktionsspulen 66 (vgl. gestrichelte Linien der Fig. 2) im Fügebereich der Bohrungen 46 induktiv schnell auf eine definierte Plustemperatur aufgeheizt.

Unmittelbar danach werden die Pleuelstangen 60 mit Gleitlagern 64 auf die Hubzapfen 12 bis 18 aufgeschoben, in axialer Ausrichtung zu den korrespondierenden Bohrungen 46 positioniert und durch Zusammenfahren der Kurbelwangen 30 bis 44 in die Bohrungen 46 bis zum axialen Anschlag am Bohrungsgrund 48 eingefahren. Als nächstes wird die so montierte Kurbelwelle 10 gekühlt (vorzugsweise mit Preßluft).

Alternativ können die Bohrungen 46 und die Hubzapfen 12-18 mit einer Preßpassung (z. B. H7,j/k6) gefertigt und positionsgenau in einer geeigneten Vorrichtung zusammengepreßt werden.

Nach dem erfolgten Einpressen der Antriebszapfen 54,56 in die Bohrungen 52 werden schließlich die Hubzapfen 12 bis 18 mit den Kurbelwangen 30 bis 44 mittels eines Co₂-Lasers verschweißt. Dazu werden auf die Stirnseiten der Kurbelwangen (siehe Fig. 2) Schweißhilfen in Form von dünnen Nickelfolien (nicht dargestellt) aufgelegt und insbesondere im Bereich gleichmäßiger Bohrungsgrund-Wandstärke mit Laserstrahlen 45 Schweißbahnen 68 aufgebracht, die in die korrespondierenden Stirnseiten der Hubzapfen durchschweißen. Während des Laserschweissens werden dabei die Lagerschalen 64 der Pleuel 60 über die Schmierölkanäle 58 mit Preßluft gekühlt.

Sodann werden je Verbindung Kurbelwangen: Hubzapfen ein oder mehrere örtliche Umfangsschweißungen ausgeführt, wobei jeweils über eine umfangsseitige Ausnehmung 76 des darunterliegenden, eine definierte Materialstärke aufweisenden Materialbereiches mit dem korrespondierenden Umfangsbereich des Hubzapfens mittels Laserstrahl 45 verschweißt wird.

Ferner werden die Antriebszapfen 54,56 lasergeschweißt, und zwar der Antriebszapfen 54 mit einer umlaufenden Schweißnaht 70 an der freien, ringförmigen Stirnseite des Lagerzapfens 20 und der Antriebszapfen 56 mit einer Schweißnaht 72 innerhalb eines weiteren Durchbruches 74 an der Kurbelwange 44. Auch hier werden entsprechende Nickelring-Schweißhilfen verwendet.

Nach dem Laserschweißen der Kurbelwelle 10 ist diese einbaufertig und bedarf keiner weiteren Nachbearbeitung, da durch die präzise Fertigung der Einzelteile und die genaue Positionierung in der Zusammenbauvorrichtung sowie aufgrund der verzugsarmen Strahlschweißung die geforderte Genauigkeit der Kurbelwelle gegeben ist. Insbesondere ist durch die Abkühlung der Hubzapfen vor dem Einschrumpfen auf Minustemperaturen und ggf. durch ein Zwischenkühlen sowie durch die letztendliche Strahlschweißung sichergestellt, daß an den Hubzapfen 12 bis 18 keine eine Schädigung der Gleitlager 64 bewirkende Temperatur auftritt.

Ggf. kann mittels der Laserenergie auch ein Nachvergüten (Anlassen) der Schweißverbindungen im Hubzapfenbereich durchgeführt werden, indem nach dem Laserschweißen und Abkühlen dieser Bereiche eine nochmalige Erwärmung mit geringerer Leistung der Laserstrahlen 45 und ein nachfolgendes Abkühlen durchgeführt wird.

## Patentansprüche

1. Gebaute Kurbelwelle für Hubkolbenmaschinen, insbesondere Brennkraftmaschinen, mit Lagerzapfen (20-28) und Hubzapfen (12-18), wobei zumindest die Hubzapfen (12-18) in entsprechenden Bohrungen (46) der Kurbelwangen (30-44) unter Druckvorspannung eingesetzt und zusätzlich an den Stirnseiten verschweißt sind, **dadurch gekennzeichnet,** daß
- die Hubzapfen (10-18) mit geschlossenen Pleuelstangen (60) mit Gleitlagern (64) kombiniert sind,
- die Bohrungen Sackloch-Bohrungen (46) sind, deren Bohrungsgrund (48) als axiale Bauteilanschläge (48) dienen, und
- der Bohrungsgrund (48) der Kurbelwangen (30-44) mit den Hubzapfen (12-18) strahlverschweißt ist.

2. Kurbelwelle nach Anspruch 1, **dadurch gekennzeichnet,** daß die Hubzapfen (12-18) nur im Bereich gleichmäßiger Wandstärke des Bohrungsgrundes (48) mit den Kurbelwangen (30-44) verschweißt sind.

3. Kurbelwelle nach den Ansprüchen 1 und 2, **dadurch gekennzeichnet,** daß die Kurbelwangen (30-44) im Bereich um die Sackloch-Bohrungen (46) Ausnehmungen (76) zur Verminderung der Wandstärke aufweisen und durch diese Ausnehmungen (76) hindurch zusätzlich mit den Hubzapfen (12-18) verschweißt sind.

4. Kurbelwelle nach den Ansprüchen 1 - 3, **dadurch gekennzeichnet,** daß Ölkanäle (58) in den Hubzapfen (12-18) und Kurbelwangen (30-44) zur Kühlung der Lagerschalen (64) der Pleuel (60) während des Schweißvorganges mit einem Kühlmedium beaufschlagt sind.

5. Kurbelwelle nach einem oder mehreren der vorhergehenden Ansprüche, **dadurch gekennzeichnet,** daß die endseitigen Lagerzapfen (20,28) einteilig mit den benachbarten Kurbelwangen (30,44) ausgebildet sind, wobei in zentrische Bohrungen (52) der Lagerzapfen (20,28) Antriebszapfen (54,56) eingesetzt und mit den Kurbelwangen (44) und/oder Lagerzapfen (20) verschweißt sind.

6. Kurbelwelle nach einem oder mehreren der vorhergehenden Ansprüche, **dadurch gekennzeichnet,** daß deren Bauteile unter Verwendung einer Schweißhilfe untereinander verschweißt sind.

7. Kurbelwelle nach einem oder mehreren der vorhergehenden Ansprüche, **dadurch gekennzeichnet,** daß zumindest die hubzapfenseitigen Schweißstellen mit leistungsreduziertem Energiestrahl nachvergütet sind.

8. Kurbelwelle nach einem oder mehreren der vorhergehenden Ansprüche, **dadurch gekennzeichnet,** daß die Hubzapfen (10-18) aus einem höherfesteren Material als die Kurbelwangen (30-44) hergestellt sind.

9. Kurbelwelle nach einem oder mehreren der vorhergehenden Ansprüche, **dadurch gekennzeichnet,** daß die Hubzapfen (10-18) nicht rolliert bzw. zusätzlich druckspannungserhöht ausgebildet sind.

## Claims

1. Crank shaft made of several parts for piston engines, in particular internal combustion engines, having journals (20-28) and crank pins (12-18), with at least the crank pins (12-18) having been inserted under conditions of compressive pretensioning into corresponding bores (46) in the crank webs (30-44) and additionally welded on the end faces, **characterised in that**
- the crank pins (10-18) are combined with sealed connecting rods (60) having slide bearings (64),
- the bores are blind bores (46), the bottoms (48) of which act as axial component stops (48), and
- the bottom (48) of the bores in the crank webs (30-44) has been radiation welded to the crank pins (12-18).

2. Crank shaft according to claim 1, **characterised in that** the crank pins (12-18) have only been welded to the crank webs (30-44) in the region of uniform thickness of the material forming the bottom (48) of the bore.

3. Crank shaft according to claims 1 and 2, **characterised in that** in the region around the blind bores (46) the crank webs (30-44) incorporate recesses (76) to reduce the thickness of the material and have been additionally welded to the crank pins (12-18) through these recesses (76).

4. Crank shaft according to claims 1 to 3, **characterised in that** a cooling medium is applied to oil ducts (58) in the crank pins (12-18) and crank webs (30-44) to cool the bearing bushes (64) of the piston rods (60) during the welding operation.

5. Crank shaft according to one or more of the preceding claims, **characterised in that** the end journals (20, 28) are constructed integrally with the adjoining crank webs (30, 44), with driving pins (54, 56) having been inserted into central bores (52) in the journals (20, 28) and welded to the crank webs (44) and/or journals (20).

6. Crank shaft according to one or more of the preceding claims, **characterised in that** the parts thereof are welded to one another with the use of a welding aid.

7. Crank shaft according to one or more of the preceding claims, **characterised in that** at least the weld points on the crank pin side are post-heat-treated with a reduced-power energy beam.

8. Crank shaft according to one or more of the preceding claims, **characterised in that** the crank pins (10-18) are made of a higher-strength material than the crank webs (30-44).

9. Crank shaft according to one or more of the preceding claims, **characterised in that** the crank pins (10-18) have not been roller-burnished or additionally given extra compressive stress.

## Revendications

1. Vilebrequin assemblé pour moteurs à piston, en particulier pour moteurs à combustion interne, comprenant des tourillons (20-28) et des manetons (12-18), les manetons (12-18) au moins étant insérés sous précontrainte de compression dans des trous correspondants (46) des flasques de manivelle (30-44) et étant en plus soudés par les faces d'extrémité, caractérisé en ce que
- les manetons (10-18) sont combinés à des bielles fermées (60) par des paliers lisses (64),
- les trous sont des trous borgnes (46) dont les fonds (48) servent de butées axiales (48) pour des éléments préfabriqués, et
- le fond (48) des trous des flasques de manivelle (30-44) est soudé par rayonnement aux manetons (12-18).

2. Vilebrequin selon la revendication 1, caractérisé en ce que les manetons (12-18) ne sont soudés aux flasques de manivelle (30-44) que dans la région d'épaisseur de paroi uniforme du fond (48) des trous.

3. Vilebrequin selon la revendication 1 ou 2, caractérisé en ce que les flasques de manivelle (30-44) présentent, dans la région entourant les trous borgnes (46), des creux (76) destinés à diminuer l'épaisseur de paroi et sont soudés en plus aux manetons (12-18) à travers ces creux (76).

4. Vilebrequin selon l'une quelconque des revendications 1 à 3, caractérisé en ce que des conduits d'huile (58) dans les manetons (12-18) et les flasques de manivelle (30-44) sont parcourus par un fluide de refroidissement pendant le processus de soudage, afin de refroidir les coquilles de coussinet (64) des bielles (60).

5. Vilebrequin selon l'une quelconque des revendications 1 à 4, caractérisé en ce que les tourillons d'extrémité (20,28) sont réalisés d'une seule pièce avec les flasques de manivelle voisins (30,44), des tourillons moteurs (54,56) étant insérés dans des trous centraux (52) des tourillons (20,28) et étant soudés aux flasques de manivelle (44) et/ou aux tourillons (20).

6. Vilebrequin selon l'une quelconque des revendications 1 à 5, caractérisé en ce que ses éléments préfabriqués sont soudés entre eux avec utilisation d'une aide de soudage.

7. Vilebrequin selon l'une quelconque des revendications 1 à 6, caractérisé en ce qu'au moins les zones de soudage du côté maneton sont soumises à un traitement ultérieur de finition avec un rayonnement d'énergie de puissance réduite.

8. Vilebrequin selon l'une quelconque des revendications 1 à 7, caractérisé en ce que les manetons (10-18) sont fabriqués en un matériau de résistance plus élevée que les flasques de manivelle (30-44).

9. Vilebrequin selon l'une quelconque des revendications 1 à 8, caractérisé en ce que les manetons (10-18) ne sont pas écrouis par rouleau ni soumis à une contrainte élevée de compression supplémentaire.
